# EUROPEAN PATENT APPLICATION

(11) **EP 4 265 154 A1**
(43) Date of publication of application: **25.10.2023**
(21) Application number: 22175899.8
(22) Date of filing: 27.05.2022
(51) Int. Cl.: A47C 19/12, E05D 3/06, E05D 11/10

(54) **CONNECTOR AND BED HAVING THE SAME**

(30) Priority: 22.04.2022 CN 202210431163
(71) Applicant: Shenzhen Made Trade Technology Co., Ltd, Shenzhen, Guangdong 518100 (CN)
(72) Inventor: YANG, Bo, Shenzhen, Guangdong, 518100 (CN)
(74) Representative: Ipey

(57) **Abstract**

A connector is provided, including a first hinge, a second hinge, a third hinge and a fourth hinge. The first hinge is connected to a first frame. The second hinge is connected to a second frame. The third hinge and a fourth hinge are disposed between the first hinge and the second hinge. The third hinge and the fourth hinge each includes a first end and a second end. The first end of the third hinge is rotatably connected to the first hinge. The second end of the fourth hinge is rotatably connected to the second hinge. The second end of the third hinge and the first end of the fourth hinge are rotatably connected through a first rotating shaft. A sum of widths of the third hinge and the fourth hinge in a direction perpendicular to the first rotating axis is greater than or equal to a preset height.

## Description

### TECHNICAL FIELD

The present disclosure relates to a field of furniture, and in particular to a connector and a bed having the same.

### BACKGROUND

Bed is an indispensable and large furniture in our daily life. For convenience of transportation and storage with lower logistics cost, the bed is usually designed to include several smaller parts which are assembled via connectors, so that the bed can be folded to reduce its overall size for transportation or storage. The typical foldable bed is folded once in half, in which two frames are connected by connectors such hinges. However, the hinges are too small to be adapted to multiple folding of the frame of a large structure. Therefore, it is necessary to provide a connector to meet the requirement for multiple folding of the bed.

### SUMMARY

The present disclosure aims to provide a connector to meet the requirement for multiple folding of the bed

According to some embodiments of the present disclosure, a connector is provided. The connector is applicable to a bed including a plurality of frames and includes a first hinge, a second hinge, a third hinge, a fourth hinge and a first rotating shaft. The first hinge is configured to be connected to a first frame of the bed. The second hinge is configured to be connected to a second frame of the bed. The third hinge and a fourth hinge are disposed between the first hinge and the second hinge. Each of the third hinge and the fourth hinge includes a first end and a second end. The first end of the third hinge is rotatably connected to the first hinge. The second end of the fourth hinge is rotatably connected to the second hinge. The second end of the third hinge and the first end of the fourth hinge are rotatably connected through the first rotating shaft. A sum of widths of the third hinge and the fourth hinge in a direction perpendicular to the first rotating axis is greater than or equal to a preset height.

In one embodiment, a locking member is provided between the second end of the third hinge and the first end of the fourth hinge, and the locking member is configured to lock and fix the third hinge and the fourth hinge at preset positions.

In one embodiment, the third hinge includes a first connecting portion at the first end, a second connecting portion at the second end, and a first body portion between the first connecting portion and the second connecting portion. The fourth hinge includes a third connecting portion at the first end, a fourth connecting portion at the second end, and a second body portion between the third connecting portion and the fourth connecting portion. The second connecting portion includes a first extension portion and a second extension portion spaced from each other. The third connecting portion includes a first abutment portion disposed close to the first extension portion, and a second abutment portion disposed close to the second extension portion. Each of the first extension portion, the second extension portion, the first abutment portion, and the second abutment portion is provided with a through hole through which the first rotating shaft passes. The locking member is disposed at one or both of a position between the first extension portion and the first abutment portion and a position between the second extension portion and the second abutment portion.

In one embodiment, each of the first abutment portion and the second abutment portion is movable with respect to the second body portion in a direction parallel to an axis of the first rotating shaft. A threaded inner surface is provided in the through hole of each of the first abutment portion and the second abutment portion. Threads at the threaded inner surface of the first abutment portion has a rotational direction opposite to that of the second abutment portion. The first rotating shaft includes a first sub-shaft passing through the first extending portion and the first abutting portion, and a second sub-shaft passing through the second extending portion and the second abutting portion. The first sub-shaft has one end provided with a threaded outer surface matching the threaded inner surface of the first abutment portion, and/or the second sub-shaft has one end provided with a threaded outer surface matching the threaded inner surface of the second abutment portion.

In one embodiment, the locking member includes a first locking portion disposed at one or both of the first extension portion and the second extension portion, and a second locking portion disposed at one or both of the first abutment portion and the second abutment portion. The first locking portion matches the second locking portion.

In one embodiment, the first locking portion includes a plurality of meshing grooves, and the second locking portion includes a plurality of meshing teeth matching the plurality of meshing grooves.

In one embodiment, a slide groove is defined at an end of the second body portion adjacent to the third connecting portion, and had a bottom and an opening opposite to the bottom. The bottom has a width larger than that of the opening. Each of the first abutment portion and the second abutment portion is provided with a slide block matching the slide groove.

In one embodiment, the first sub-shaft is detachably connected to the second sub-shaft.

According to some embodiments of the present disclosure, a bed is provided. The bed includes a first frame, a second frame and a third frame. The third frame and the first frame are rotatably connected via a first connector in such a way that the third frame is rotatable to be stacked under the first frame. The first frame and the second frame are rotatably connected via a second connector in such a way that the second frame is rotatable to be stacked onto the first frame or under the third frame. The second connector is the connector according to any one of the aforementioned embodiments.

In one embodiment, the bed further includes a fourth frame rotatably connected to the second frame via the first connector in such a way that fourth frame is rotatable to be stacked onto the second frame 300 or to be disposed between the third frame and the second frame.

The present disclosure has advantages as follows.

With the third hinge and the fourth hinge disposed between the first hinge fixed to the first frame and the second hinge fixed to the second frame, and with the sum of the widths of the third hinge and the fourth hinge in the direction perpendicular to the first rotating axis being greater than or equal to the preset height, a space sufficient for accommodating the third frame is formed between the first frame and the second frame, so that the bed is foldable in a such way that the first frame, the second frame and the third frame are stacked one onto one. When the bed is unfolded, the first frame, the second frame and the third frame are disposed side by side and seamlessly abutted. The bed employing such the connector meets both requirement for usage and convenience for transportation and storage. With the locking member providing a retaining force for the frames when folded, stability of the frames and the connector is ensured, and deformation and damage of them are avoided.

### BRIEF DESCRIPTION OF THE DRAWINGS

In order to describe the technical solutions in the embodiments of the present disclosure more clearly, the accompanying drawings for description of the embodiments will be briefly introduced below. It should be appreciated that the accompanying drawings in the following description are merely some embodiments of the present disclosure, and other drawings may be conceivable from these drawings without creative effort for those skilled in the art.
FIG. 1 is a schematic diagram of a connector according to an embodiment of the present disclosure, by which two frames of a bed are connected.
FIG. 2 is a sectional view of the connector taken from line A-A in FIG. 1.
FIG. 3 is a sectional view of the connector taken from line B-B in FIG. 2.
FIG. 4 is a schematic diagram of a bed in an unfolded state according to an embodiment of the present disclosure.
FIG. 5 is a schematic diagram of a bed in a folded state according to an embodiment of the present disclosure.
FIG. 6 is a schematic diagram of a bed in an unfolded state according to another embodiment of the present disclosure.
FIG. 7 is a schematic diagram of a bed in a folded state according to another embodiment of the present disclosure.

### DETAILED DESCRIPTION

For ease of understanding, some embodiments of the present disclosure will be described in detail below with reference to the accompanying drawings. It should be appreciated that the present disclosure may be implemented in many different forms and is not limited to the embodiments described herein. Rather, these embodiments are provided merely for the purpose of providing a more thorough understanding of the present disclosure.

It should be noted that when an element is referred to as being "connected" or "fixed" to another element, the element may be connected or fixed to the other element directly or through an intermediate element. The terms "vertical," "horizontal," "left," "right" and the like are used herein for illustrative purposes only.

Unless otherwise defined, all terms used herein have the same meanings as those generally understood by those skilled in the art. The terms used in the description of the present disclosure are for the purpose of describing specific embodiments only and are not intended to limit the present disclosure. The terms "and/or" used herein include any and all combinations of one or more related listed items.

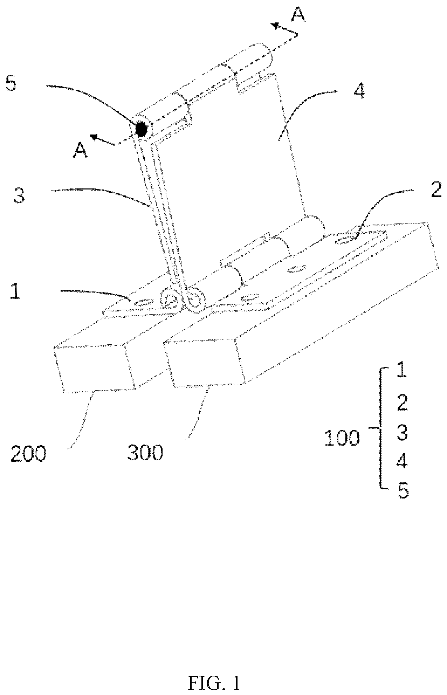

Referring to FIG. 1, according to an embodiment of the present disclosure, a connector 100 is provided and includes a first hinge 1, a second hinge 2, a third hinge 3, and a fourth hinge 4. The third hinge 3 and the fourth hinge 4 are disposed between the first hinge 1 and the second hinge 2. The third hinge 3 has a first end rotatably connected to the first hinge 1 and a second end rotatably connected to a first end of the fourth hinge 4 via a first rotating shaft 5, and the fourth hinge 4 further includes a second end rotatably connected to the second hinge 2. A bed which employs the connector includes a first frame 200, a second frame 300, and a third frame 400. The first hinge 300 is fixed to one end of the first frame 200 by bolts, and the second hinge 300 is fixed to one end of the second frame 300 by bolts. In this way, when the second frame 300 is rotated to be disposed above the first frame 200, the first frame 200 and the second frame 300 can be spaced apart due to the third hinge and the fourth hinge, so that a space for accommodation of other frames is formed between the first frame 200 and the second frame 300. A sum H of the widths of the third hinge 3 and the fourth hinge 4 in a direction perpendicular to the first rotating axis 5 is greater than or equal to a preset height. In an embodiment, the preset height is equal to a sum of heights of the first frame 200 and the second frame 300, or is equal to a height of the third frame 400. Generally, the first frame 200, the second frame 300, and the third frame 400 are equal in height. Multiple folding of the bed is achieved for convenience of transportation and storage of the bed with lower logistics cost.

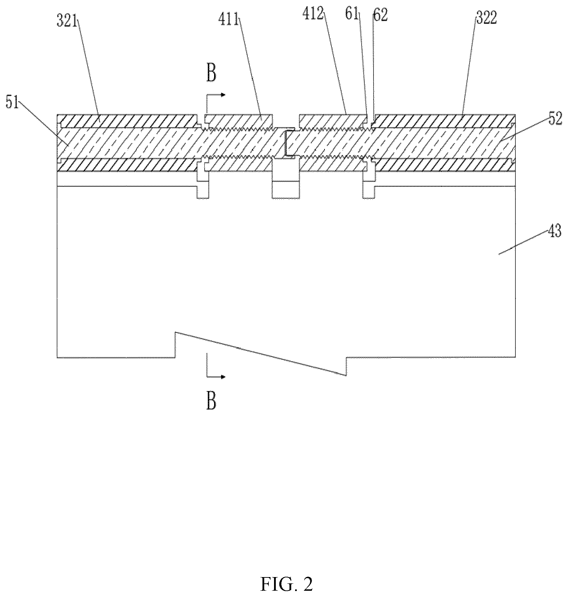

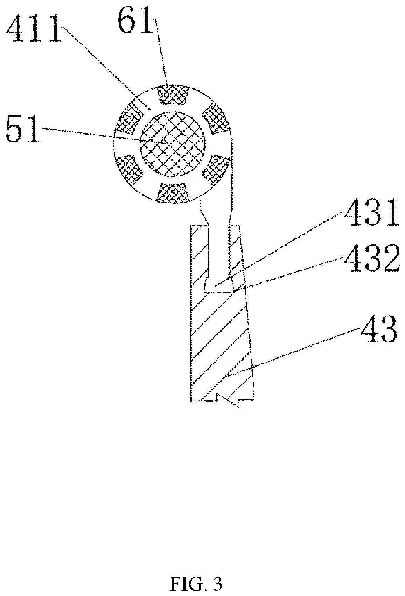

In some embodiments, referring to FIGS. 2-3, the third hinge 3 includes a first connecting portion 31 at the first end, a second connecting portion 32 at the second end, and a first body portion 33 between the first connecting portion 31 and the second connecting portion 32. The fourth hinge 4 includes a third connecting portion 41 at the first end, a fourth connecting portion 42 at the second end, and a second body portion 43 between the third connecting portion 41 and the fourth connecting portion 42. The second connecting portion 32 includes a first extension portion 321 and a second extension portion 322 spaced from each other. The third connecting portion 41 includes a first abutment portion 411 disposed close to the first extension portion 321, and a second abutment portion 412 disposed close to the second extension portion 322. Each of the first extension portion 321, the second extension portion 322, the first abutment portion 411, and the second abutment portion 412 is provided with a through hole through which the first rotating shaft 5 passes.

In some embodiments, referring to FIG. 2-3, a locking member 6 is provided between the second end of the third hinge 3 and the first end of the fourth hinge 4. The locking member 6 is configured to lock and fix the third hinge and the fourth hinge when the third hinge and the fourth hinge reach their preset positions. The locking member is provided for two reasons. Firstly, the frame itself has a large weight, which causes the frame to apply a large force on the connector during use or in the folded state. In this embodiment, due to the space formed by the connector, the second frame is suspended above the first frame, so that a large bending moment is generated in the connector, especially when the third frame disposed therebetween cannot provide a support for the second frame, which causes damage to the connector. Secondly, during the transportation or storage, other goods may be disposed on the bed which is in the folded state, so that the connector may bear external force in addition to the weight of the frame, which causes deformation and damage to the connector. Thus, the locking member is required for the connector to provide sufficient holding force and supporting force for the second frame when the second frame is rotated to be disposed above the first frame, resulting in stability of the frames and the connector and avoiding deformation and damage of them. In this way, the service life of the bed is improved.

In some embodiments, the locking member 6 may be disposed between the first extension portion 321 and the first abutment portion 411 and/or between the second extension portion 322 and the second abutment portion 412.

An embodiment in which the locking member is provided at both positions will be described below. Referring to FIGS. 2-3, each of the first abutment portion 411 and the second abutment portion 412 is movable with respect to the second body portion 413 in a direction parallel to an axis of the first rotating shaft 5, and has its through hole with a threaded inner surface. Threads at the threaded inner surface of the first abutment portion 411 has a rotational direction opposite to that of the second abutment portion 412. The first rotating shaft 5 includes a first sub-shaft 51 passing through the through holes of the first extending portion 321 and the first abutting portion 411, and a second sub-shaft 52 passing through the through holes of the second extending portion 322 and the second abutting portion 412. The first sub-shaft 51 has one end provided with a threaded outer surface matching the threaded inner surface of the first abutment portion 411 for connection to the first abutment portion 411. The second sub-shaft 52 has one end provided with a threaded outer surface matching the threaded inner surface of the second abutment portion 412 for connection to the second abutment portion 412. With the matching threaded surfaces, during rotation of the fourth hinge 4 relative to the third hinge 3, the first abutment portion 411 and the second abutment portion 412 move toward or away from the first extension portion 321 and the second extension portion 322, respectively.

The locking member 6 includes a first locking portion 62 disposed on an end surface of each of the first extension portion 321 and the second extension portion 322, and a second locking portion 61 disposed on an end surface of each of the first abutment portion 411 and the second abutment portion 412. The first locking portion 62 matches the second locking portion 61.

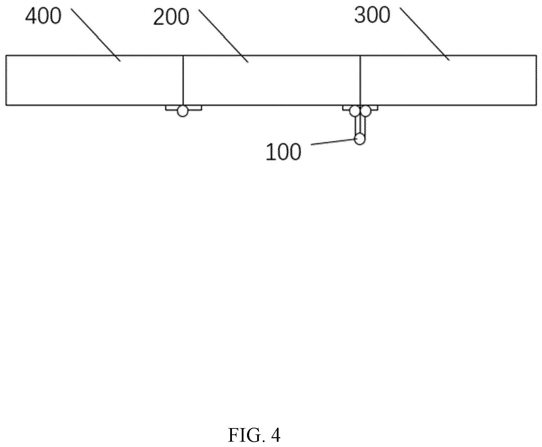

Referring to FIGS. 4-5, when the first frame 200 and the second frame 300 are unfolded, the third hinge 3 and the fourth hinge 4 are folded to be substantially parallel to and abutted to each other. During folding, the second frame 300 is rotated to be disposed above the first frame 200, and the fourth hinge 4 is rotated around the first rotating shaft 5 to be aligned with the third hinge 3, and the included angle between the third 3 and the fourth hinge 300 is substantially 180 degrees. During rotation of the fourth hinge 4, the first abutment portion 411 and the second abutment portion 412 are rotated around the first sub-shaft 51 and the second sub-shaft 52, respectively. As, due to the threads, the first abutment portion 411 and the second abutment portion 412 move toward the first extension portion 321 and the second extension portion 322, respectively, the first locking portion 62 and the second locking portion 61 move toward each other until being connected to lock the hinges. After the locking is completed, the second frame 300 can be suspended above the first frame 200, so as to hold the folded frame in small outer dimensions and meanwhile to avoid deformation and damage to the bed caused by external forces.

In some embodiments, the first locking portion 62 includes a plurality of meshing grooves, and the second locking portion 61 includes a plurality of meshing teeth matching the plurality of meshing grooves. With meshing of the meshing teeth and the meshing grooves, a locking effect is achieved. The description herein is by way of example only, and is not intended to limit the present disclosure. As an alternative, the meshing teeth and the meshing grooves may be interchanged in position.

In some embodiments, the third connecting portion 41 detachably connected to the second body portion 43. A slide groove 432 is defined at an end of the second body portion 43 adjacent to the third connecting portion 41, and each of the first abutment portion 411 and the second abutment portion 412 is provided with a slide block 431 matching the slide groove 432. The slide block 431 is inserted into the slide groove 432 and movable in a direction along the axis of the first rotating shaft 5. Further, the slide groove 432 may have a larger width close to its bottom and a smaller width close to its opening, and the slide block 431 has a shape matching the slide groove 432, so that the slide block 431 is prevented from moving in other directions. The cross-section of the slide block 431 may be triangular or trapezoidal.

In some embodiments, a stop may be provided at a top of the slide groove to prevent the slide block moving in other directions.

In some embodiments, in order to ensure the locking member 6 and the first rotating shaft 5 are rigid enough when the connector bears load, the first sub-shaft and the second sub-shaft are detachably connected, for example, threadedly connected. For example, one of the first sub-shaft and the second sub-shaft is provided with a threaded hole and other one of them is provided with an external thread. With the detachable connection through the threads, and the first sub-shaft 51 and the second sub-shaft 52 are connected as a whole to suffer from a force. Further, the threads for the detachable connection may be consistent with the threads of the first abutment portion or the second abutment portion, thereby lowering the processing difficulty.

In some embodiments, at least one of the first sub-shaft 51 and the second sub-shaft 52 is provided with a positioning structure that acts with the first extension portion and/or the second extension portion. The positioning structure prevents movement of the first sub-shaft relative to the first extension portion and/or movement of the second sub-shaft relative to the second extension portion, thereby avoiding relative displacement between the third hinge and the fourth hinge during rotation. For example, the positioning structure may be a pin, or may be shaped to match in profile, which is not limited herein.

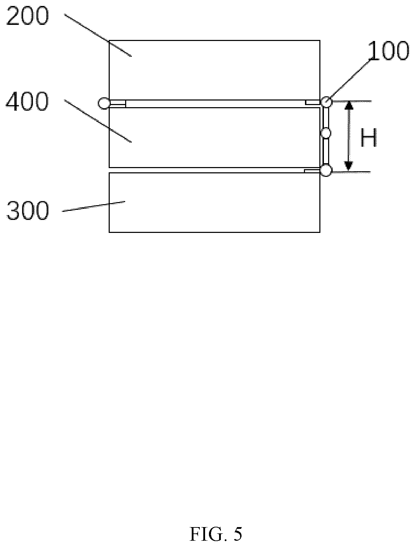

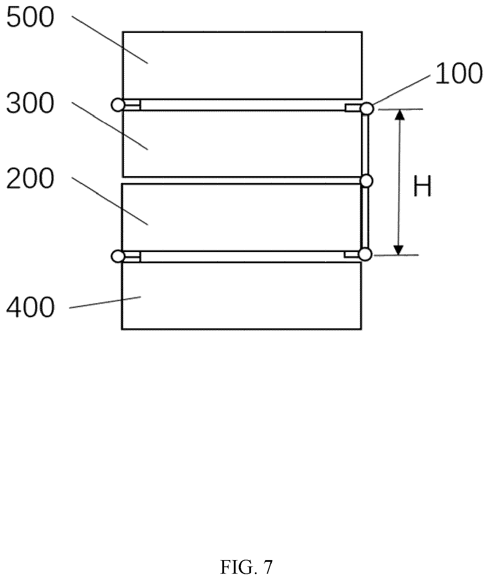

According to other embodiments of the present disclosure, a bed is provided. Referring to FIG. 4, the bed includes a first frame 200, a second frame 300 and a third frame 400 that are detachably connected. The third frame 400 is rotatably connected to the first frame 200 through a first connector, the first frame 200 and the second frame 300 are rotatably connected through a second connector. For example, the first connector is a typical hinge used in the existing technology, and the second connector is the connector 100 as discussed in the forgoing embodiments. The third frame 400 may be rotated to be stacked under the first frame 200, and the second frame 300 may be rotated to be stacked under the third frame 400 as shown in FIG. 5 or may be rotated to be stacked onto the first frame 200 as shown in FIG. 7.

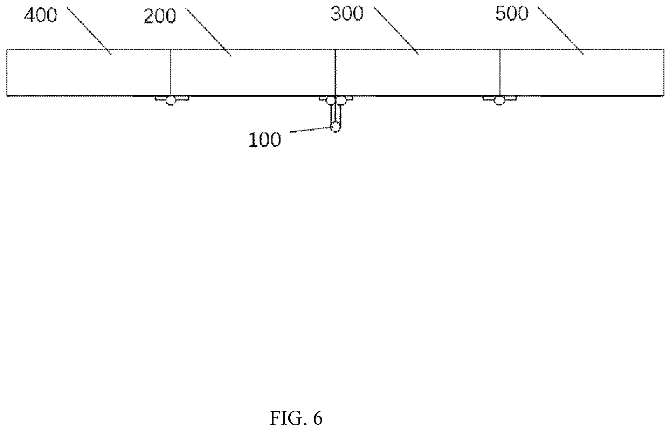

In other embodiments, referring to FIG. 6, the bed further includes a fourth frame 500 rotatably connected to the second frame 300 via the first connector. The fourth frame 500 may be rotated to be stacked onto the second frame 300 as shown in FIG. 7 or may be rotated to be disposed between the third frame 400 and the second frame 300 (not shown).

The above-described embodiments are merely some of embodiments of the present disclosure, but not to be considered as limiting the scope of the patent disclosure. It should be noted that, for those skilled in the art, several modifications and improvements may be made without departing from the concept of the present disclosure, all of which fall within the protection scope of the present disclosure. Therefore, the protection scope of the present disclosure should be subject to the claims.

## Claims

1. A connector, applicable to a bed including a plurality of frames, the connector comprising:
a first hinge configured to be connected to a first frame of the bed;
a second hinge configured to be connected to a second frame of the bed;
a third hinge and a fourth hinge disposed between the first hinge and the second hinge, wherein each of the third hinge and the fourth hinge includes a first end and a second end, the first end of the third hinge is rotatably connected to the first hinge, and the second end of the fourth hinge is rotatably connected to the second hinge;
a first rotating shaft, through which the second end of the third hinge and the first end of the fourth hinge are rotatably connected; and
wherein a sum of widths of the third hinge and the fourth hinge in a direction perpendicular to the first rotating axis is greater than or equal to a preset height.

2. The connector according to claim 1, wherein a locking member is provided between the second end of the third hinge and the first end of the fourth hinge, and the locking member is configured to lock and fix the third hinge and the fourth hinge at preset positions.

3. The connector according to claim 2, wherein the third hinge includes a first connecting portion at the first end, a second connecting portion at the second end, and a first body portion between the first connecting portion and the second connecting portion, the fourth hinge includes a third connecting portion at the first end, a fourth connecting portion at the second end, and a second body portion between the third connecting portion and the fourth connecting portion; and
wherein the second connecting portion includes a first extension portion and a second extension portion spaced from each other, the third connecting portion includes a first abutment portion disposed close to the first extension portion, and a second abutment portion disposed close to the second extension portion, each of the first extension portion, the second extension portion, the first abutment portion, and the second abutment portion is provided with a through hole through which the first rotating shaft passes, and the locking member is disposed at one or both of a position between the first extension portion and the first abutment portion and a position between the second extension portion and the second abutment portion.

4. The connector according to claim 3, wherein each of the first abutment portion and the second abutment portion is movable with respect to the second body portion in a direction parallel to an axis of the first rotating shaft, and a threaded inner surface is provided in the through hole of each of the first abutment portion and the second abutment portion, threads at the threaded inner surface of the first abutment portion has a rotational direction opposite to that of the second abutment portion;
wherein the first rotating shaft includes a first sub-shaft passing through the first extending portion and the first abutting portion, and a second sub-shaft passing through the second extending portion and the second abutting portion; and
wherein the first sub-shaft has one end provided with a threaded outer surface matching the threaded inner surface of the first abutment portion, and/or the second sub-shaft has one end provided with a threaded outer surface matching the threaded inner surface of the second abutment portion.

5. The connector according to claim 3, wherein the locking member includes a first locking portion disposed at one or both of the first extension portion and the second extension portion, and a second locking portion disposed at one or both of the first abutment portion and the second abutment portion, and the first locking portion matches the second locking portion.

6. The connector according to claim 5, wherein the first locking portion includes a plurality of meshing grooves, and the second locking portion includes a plurality of meshing teeth matching the plurality of meshing grooves.

7. The connector according to claim 4, wherein a slide groove is defined at an end of the second body portion adjacent to the third connecting portion, and has a bottom and an opening opposite to the bottom, the bottom has a width larger than that of the opening, and each of the first abutment portion and the second abutment portion is provided with a slide block matching the slide groove.

8. The connector according to claim 4, wherein the first sub-shaft is detachably connected to the second sub-shaft.

9. A bed comprising a first frame, a second frame and a third frame, wherein the third frame and the first frame are rotatably connected via a first connector in such a way that the third frame is rotatable to be stacked under the first frame, the first frame and the second frame are rotatably connected via a second connector in such a way that the second frame is rotatable to be stacked onto the first frame or under the third frame; and
wherein the second connector includes:
a first hinge configured to be connected to the first frame;
a second hinge configured to be connected to the second frame;
a third hinge and a fourth hinge disposed between the first hinge and the second hinge, wherein each of the third hinge and the fourth hinge includes a first end and a second end, the first end of the third hinge is rotatably connected to the first hinge, and the second end of the fourth hinge is rotatably connected to the second hinge;
a first rotating shaft, through which the second end of the third hinge and the first end of the fourth hinge are rotatably connected; and
wherein a sum of the widths of the third hinge and the fourth hinge in a direction perpendicular to the first rotating axis is greater than or equal to a preset height.

10. The bed according to claim 9, further comprising a fourth frame rotatably connected to the second frame via the first connector in such a way that fourth frame is rotatable to be stacked onto the second frame 300 or to be disposed between the third frame and the second frame.
